# EUROPEAN PATENT SPECIFICATION

(11) **EP 3 000 304 B1**
(45) Date of publication and mention of the grant of the patent: **26.09.2018**
(21) Application number: 15185809.9
(22) Date of filing: 18.09.2015
(51) Int. Cl.: A01D 41/127, A01B 79/00

(54) **AGGREGATE YIELD ALLOCATION**
GESAMTERTRAGSZUTEILUNG
ATTRIBUTION DE RENDEMENT AGRÉGÉ

(30) Priority: 23.09.2014 US 201462054187 P
(43) Date of publication of application: 30.03.2016
(73) Proprietor: Deere & Company, Moline, IL 61265 (US)
(72) Inventor: Bruns, Aaron J, Bettendorf, IA Iowa 52722 (US); Phelan, James J, Bettendorf, IA Iowa 52722 (US); Anderson, Noel W, Fargo, ND 58102 (US); Dybro, Niels, Sherrard, IL Illinois 61281 (US)
(74) Representative: Holst, Sönke

(56) References cited:
- EP-A1- 0 960 558
- EP-A1- 2 529 610
- GB-A- 2 350 275
- US-A1- 2010 036 696
- US-A1- 2014 129 146
- US-A1- 2014 236 381

## Description

Some harvesters sense an aggregate yield being harvested across a width of a harvesting head. The aggregate yield data assists in the crop management.

Such a harvester is described in EP 0 960 558 A1, showing a combine with a platform header. The aggregate yield is sensed in the grain elevator and combined with data from a speed sensor and a position sensor for establishing maps showing the spatial variation of the monitored parameters. A travel time for the crop from the header to the sensor is considered in the allocation of the crop to the maps, but considered as fixed, resulting in errors when the conveyor speed should change.

### Brief Description of the Drawings

- Fig. 1: is a schematic diagram of an example aggregate yield allocation system.
- Fig. 2: is a schematic diagram of an example aggregate yield allocation scheme.
- Fig. 3: is a flow diagram of an example aggregate yield allocation method.
- Fig. 4: is a flow diagram of another example aggregate yield allocation method employing weightings.
- Fig. 5: is a schematic diagram of another example aggregate yield allocation scheme output from the method of Figure 4.
- Fig. 6: is a diagram of an example yield map output by an example yield allocation system carrying out the method of Figure 4.
- Fig. 7: is a schematic diagram of another example aggregate yield allocation system including an example harvester.
- Fig. 8: is a front view of an example head of the harvester of Figure 7.
- Fig. 9: is a perspective view of an example row unit of the head of Figure 8.
- Fig. 10: is a diagram of an example field being harvested by the harvester of Figure 7, indicating feeder house arrival times for grain from different row units.
- Fig. 11: is a diagram of an example aggregate yield allocation scheme.

### Detailed Description of Examples

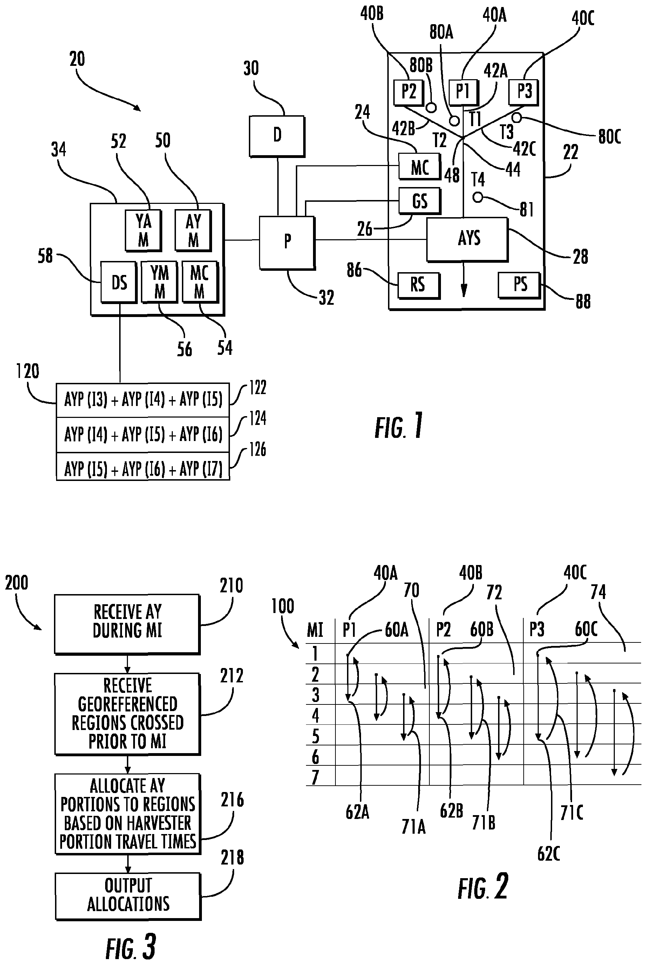

Figure 1 schematically illustrates an example aggregate yield allocation system 20. Aggregate yield allocation system 20 allocates aggregate yield for a crop, such as grain or other harvested material such as cane billets, cotton and the like, to different geo-referenced locations or regions. As will be described hereafter, aggregate yield allocation system 20 takes into account different travel times for crops from different portions of a harvester head to an aggregate sensor when allocating the aggregate yield. As a result, system 20 more accurately allocates aggregate yield to the different geo-referenced locations or regions.

Aggregate yield allocation system 20 comprises harvester 22, machine controller 24, geo-referencing system 26, aggregate yield sensor 28, display 30, processor 32 and memory 34. Harvester 22 comprises a machine to harvest crops. In one implementation, harvester 22 is self-propelled. In another implementation, harvester 22 is towed. Harvester 22 removes portions of plants (the crop) from the growing medium or field. In one implementation, harvester 22 comprises a holding tank in which the crop is held. In another implementation, harvester 22 discharges the removed crop into a holding tank of another vehicle or onto the ground for subsequent collection.

Harvester 22 comprises crop removal portions 40A, 40B and 40C (collectively referred to as crop removal portions 40) and crop conveyors 42A, 42B, 42C (collectively referred to as crop conveyors 42), 44, each of which is schematically illustrated. Crop removal portions 40 sever, lift and/or remove the crop being harvested from the growing medium or field. In one implementation, crop removal portions 40 cut the stem or stalk of a plant carrying the crop to be harvested. In another implementation, crop removal portions 40 separate the crop to be harvested from the stalk or plant while the stalk or plant remains in the ground.

In the example illustrated, crop removal portions 40 are transversely located across a transverse width of harvester 22. In one implementation, crop removal portions 40 are located at different transverse locations across a harvester head. In other implementations, crop removal portions 40 are located at different transverse locations at different locations of harvester 22. Although harvester 22 is illustrated as comprising three crop removal portions 40, in other implementations, harvester 22 comprises two crop removal portions or more than three crop removal portions. For example, in one implementation, harvester 22 comprises a head having a plurality of row units, each row unit having a crop removal portion that removes the crop being harvested from the soil.

Crop conveyors 42 comprise mechanisms that convey the crops, once they have been removed or separated from the growing medium or field, to an aggregation location 48 at which crops from the different portions 40 are aggregated. In one implementation, aggregation location 48 comprises a feeder house at which crops harvested across the head are aggregated. In one implementation, due to the different transverse locations of crop removal portions 40, crop conveyors 42 have different lengths. In one implementation, crop conveyors 42 operate at different conveying speeds. Either due to the different transverse locations and/or the different conveying speeds, crops from crop removal portions 40 take different amounts of time to reach aggregation location 48.

In the example illustrated, crop conveyor 42A conveys crops from crop removal portion 40A to aggregation location 48 in time T1. Crop conveyor 42B conveys crops from crop removal portion 40B to aggregation location 48 in time T2 which is greater than time T1. Crop conveyor 42C conveys crops from crop removal portion 40C to aggregation location 48 in time T3 which is greater than time T2. In some implementations, one or more of crop conveyors 42 convey crops from different crop removal portions 40 in the same amount of time.

Crop conveyor 44 conveys crops from aggregation location 48 to an ultimate destination for the crop, whether it be a holding tank carried by harvester 22, a holding tank of another vehicle or a discharge location onto the ground for subsequent collection. In one implementation, crop conveyor 44 conveys the crop being harvested along with other material during separation of the crop from the other material. For example, in one implementation, crop conveyor 44 conveys portions of a plant and grain while the grain is separated from the remaining portions of the plant. In one implementation, crop conveyor 44 conveys the crop through one or more threshing devices.

Machine controller 24 comprise one or more processing units that output control signals to control the operational settings for harvester 22. For purposes of this application, the term "processing unit" shall mean a presently developed or future developed processing unit that executes sequences of instructions contained in a non-transitory computer-readable medium or memory. Execution of the sequences of instructions causes the processing unit to perform steps such as generating control signals. The instructions may be loaded in a random access memory (RAM) for execution by the processing unit from a read only memory (ROM), a mass storage device, or some other persistent storage. In other embodiments, hard wired circuitry may be used in place of or in combination with software instructions to implement the functions described. For example, machine controller 24 is be embodied as part of one or more application-specific integrated circuits (ASICs). Unless otherwise specifically noted, the controller is not limited to any specific combination of hardware circuitry and software, nor to any particular source for the instructions executed by the processing unit.

In one implementation, machine controller 24 controls a translational speed of harvester 22 across a field, a severing or removal parameter for each of crop removal portions 40, a conveying speed or parameter for each of conveyors 42, 44, and/or an operational settings for threshing devices of harvester 22. In one implementation, machine controller 24 is carried by harvester 22 on board. In another implementation, machine controller 24 is at least partially embodied in a remote location, wherein such control signals are transmitted in a wireless fashion from the remote location to a communication transceiver carried by harvester 22.

Geo-reference system 26 comprises a device by which different regions of a field are identified, labeled and/or geo-referenced for being assigned crop yield characteristics. In one implementation, geo-reference system 26 specifically identifies a particular region or location of the field that is currently being driven over or traversed by harvester 22. In one implementation, geo-reference system 26 identifies regions of a field with a resolution such that each individual geo-referenced region has a width substantially equal to a width of harvester 22, such as a width of a head, such as when harvester 22 comprises a combine. In another implementation, the resolution is such that each geo-referenced region has a width of a plurality of rows less than the full width of harvester 22, wherein the full width of harvester 22 travels across multiple distinctly identified geo-referenced regions. In yet another implementation, the resolution is such that each geo-referenced region has a width equal to an individual row of plants, wherein each geo-referenced region has a width corresponding to an individual row of plants. In one implementation, the resolution of geo-referencing system 26 identifies geo-referenced regions having a length of a single rank of plants, a single plant across multiple rows. In another implementation, the resolution is such that each geo-referenced region has a length of a multiple ranks of plants, a set of multiple consecutive plants in each row. In one implementation, geo-reference system 26 comprises an antenna and associated electronics/software as part of a global navigational satellite system (GNSS) or global positioning system (GPS). In other implementations, other devices or other methods and/or technologies are used.

Aggregate yield sensor 28 comprises one or more sensors along conveyor 44 that output a signal indicating an aggregate yield of the crop that has been harvested during a measurement interval. In one implementation, an aggregate yield is the aggregation or total combined yield from each of portions 40 and as sensed by aggregate yield sensor 28. In one implementation, a measurement interval is a measurement interval during which the crop amount, resulting in the aggregate yield value, was sensed or detected by aggregate yield sensor 28. In one implementation, the measurement interval is defined as the lapse of a predetermined amount of time during which harvester 22 traverses a field. In another implementation, the measurement interval is defined as a distance traveled by harvester 22. During each measurement interval and/or at the end of each measurement interval, aggregate yield sensor 28 outputs signals which indicate a total or cumulative amount of crop that has been sensed during the measurement interval. In one implementation, each measurement interval is the same amount of time or the same amount of distance. In yet other implementations, measurement intervals vary in duration or distance.

In one implementation, aggregate yield sensor 28 comprises a grain flow sensor that detects a flow of crop, grain, by conveyor 44. For example, in one implementation, aggregate yield sensor 28 comprises a GammaRay attenuation sensor that measures flow rate of aggregated harvested grain by conveyor 44. In one implementation, aggregate yield sensor 28 comprises an impact plate sensor that detects impact of grain against a sensing plate are surface system measure mass flow rate of aggregated harvested grain by conveyor 44. In yet another implementation, aggregate yield sensor 28 comprises one or more load cells which measure or detect a load or aggregated massive harvested grain. For example, in one implementation, the one or more load cells may be located at a bottom of a holding tank carried by harvester 22, wherein changes in the weight or mass of grain within the holding tank during the measurement interval indicates the aggregate yield during the measurement interval. In yet another implementation, aggregate yield sensor 28 comprises cameras or optical sensing devices that detect the size and/or shape of an aggregated mass of harvested grain, such as the shape of the mound or height of a mound of grain in a holding tank of harvester 22, wherein the change in shape or height of the mound during the measurement interval indicates the aggregate yield during the measurement interval. In other implementations, other aggregate yield sensing technologies are employed. In some implementations, aggregate yield sensor 28 comprises two or more of the above described sensors, wherein the aggregate yield for the measurement interval is determined from signals output by each of the multiple different types of sensors. For example, in one implementation, aggregate yield is determined based upon signals from a gamma ray attenuation sensor, an impact plate sensor, load cells within a holding tank and optical sensors along a holding tank of harvester 22.
Display 30 comprises a monitor, screen, panel or other device by which information is visibly communicated. In one implementation, display 30 additionally comprises auditory communication capabilities. Display 30 facilitates the presentation of information identifying the allocation of aggregate yield amongst different geo-referenced regions. In one implementation, display 30 is carried on board harvester 22 for viewing by an operator on harvester 22. In another implementation of display 30 is located remote with respect to harvester 22, such as where harvester 22 is remotely operated or such as when remote personnel or managers are analyzing or reviewing aggregate yield of different geo-referenced regions of a field.

Processor 32 comprises one or more processing units which receive signals from aggregate yield sensor 28 and signals from geo-referencing system 26 and utilizes such signals to allocate aggregate yield amongst different geo-referenced regions. In one implementation, processor to is embodied as part of machine controller 24. In another implementation processor 32 is separate and independent of machine controller 24.

Memory 34 comprises a non-transitory computer-readable medium or persistent storage device. In one implementation, memory 34 is carried by harvester 22. In another implementation, memory 34 is remote from harvester 22. In yet another implementation, memory 34 is distributed across different locations. Memory 34 comprises aggregate yield module 50, yield allocation module 52, machine control module 54, yield mapping module 56 and data storage 58.

Aggregate yield module 50 comprises software, code, circuitry and/or program logic providing instructions for directing processor 32 to determine an aggregate yield for each measurement interval based upon signals received from aggregate yield sensor 28. As noted above, the aggregate yield for each measurement interval is based upon signals received from a GammaRay attenuation sensor, impact plate sensors, flow sensors, load sensors and/or optical sensors.

Yield allocation module 52 comprises software, code, circuitry and/or program logic providing instructions for directing processor 32 to allocate portions of the aggregate yield for a particular measurement interval to each of at least two geo-referenced regions that were traversed by harvester 22 prior to the particular measurement interval, wherein the allocation is based upon different amounts of time for crops to travel to aggregate yield sensor 28 after being initially separated from the growing medium or ground to aggregate yield sensor 28. In the example illustrated, the time for crops to travel from aggregation location 48 to aggregate yield sensor 28 is the same for crops harvested from each of portions 40. However, due to either different travel distances and/or different conveying speeds, reflected by the different travel times T1, T2 and T3 for portions 40A, 40B and 40C, respectively, crops removed by crop removal portions 40A, 40B and 40C during a particular measurement interval arrive at aggregate yield sensor 28 at different times after conclusion of the measurement interval. Yield allocation module 52 allocates the aggregate yield value for the measurement interval to different geo-referenced regions that were traversed or interacted upon by crop removal portions 40 prior to the measurement interval.

Figure 2 schematically illustrates an example aggregate yield allocation scheme 100 carried out by aggregate yield allocation system 20. Figure 2 illustrates the initial removal of crop from the growing medium or field by each of crop removal portions 40 during each of measurement intervals 1, 2 and 3. The straight arrows in Figure 2 indicate conveyance of the removed crop to aggregate yield sensor 28, wherein the end of such straight arrows indicate the measurement interval during which the removed crop arrives at aggregate yield sensor 28 and contributes to a determined aggregate yield for an associated measurement interval. The curved allocation arrows in Figure 2 indicate allocation of aggregate yield from each particular measurement interval to geo-referenced regions which were traversed by harvester 22 during earlier measurement intervals.

As shown by Figure 2, crop removal portion 40A removes crop from the growing medium at time 60 during measurement interval 1. After being removed, the crop removed at time 60A is conveyed, and possibly further interacted upon such as being threshed to separate from other portions of the plant, until the crop is sensed by aggregate yield sensor 28 at time 62A which occurs during a subsequent measurement interval 3. The difference between time 60A and 62A is the time consumed as a crop travels from portion 40A to aggregate yield sensor 28, times T1+T4, where time T1 is a duration of time for the crop to travel from crop removal portion 40A to aggregation location 48 and where time T4 is a duration of time for the crop to travel from aggregation location 48 to aggregate yield sensor 28.

Likewise, crop removal portion 40B removes crop from the growing medium at time 60B during measurement interval 1. After being removed, the crop removed at time 60B is conveyed, and possibly further interacted upon such as being threshed to separate from other portions of the plant, until the crop is sensed by aggregate yield sensor 28 at time 62B which occurs during a subsequent measurement interval 4. The difference between time 60B and 62B is the time consumed as a crop travels from portion 40B to aggregate yield sensor 28, times T2+T4, where time T2 is a duration of time for the crop to travel from crop removal portion 40B to aggregation location 48 and where time T4 is a duration of time for the crop to travel from aggregation location 48 to aggregate yield sensor 28. Because travel time T2 is greater than travel time T1, crops from portion 40B(?) contribute to the aggregate yield of measurement interval 4 rather than measurement interval 3 despite that the crops for portions 40A and 40B were both separated from the growing medium during the same measurement interval 1.

Likewise, crop removal portion 40C removes crop from the growing medium at time 60C during measurement interval 1. After being removed, the crop removed at time 60C is conveyed, and possibly further interacted upon such as being threshed to separate grain from other portions of the plant, until the crop is sensed by aggregate yield sensor 28 at time 62C which occurs during a subsequent measurement interval 5. The difference between times 60C and 62C is the time consumed as a crop travels from portion 40C to aggregate yield sensor 28, times T3+T4, where time T3 is a duration of time for the crop to travel from crop removal portion 40C to aggregation location 48 and where time T4 is a duration of time for the crop to travel from aggregation location 48 to aggregate yield sensor 28. Because travel time T3 is greater than travel time T2, crops from portion 40C contribute to the aggregate yield of measurement interval 5 rather than measurement interval 4 despite that the crops for portions 40B and 40C were both separated from the growing medium during the same measurement interval 1.

As indicated by curved allocation arrows in Figure 2, yield allocation module 52 allocates portions of the aggregate yield for each particular measurement interval back to two or more geo-referenced regions traversed by harvester 22 prior to the particular measurement interval. In the example illustrated, the aggregate yield for measurement interval 5, as determined by aggregate yield module 50, is allocated back to geo-referenced region 70 (as indicated by arrow 71A), which was traversed by harvester 22 during measurement interval 3; is allocated back to geo-referenced region 72 (as indicated by arrow 71B), which was traversed by harvester 22 during measurement interval 2; and is allocated back to geo-referenced region 74 (as indicated by arrow 71C), which was traversed by harvester during measurement interval 1.

Yield allocation module 52 is usable with various geo-referencing systems 26 having varying resolutions. For example, in one implementation, yield allocation module 52 is usable with a geo-referencing system 26, wherein each of geo-referenced regions 70, 72 and 74 has a width corresponding to a collective width of portions 40. In another implementation, aggregate yield allocation module 52 is usable with a geo-referencing system 26 having a resolution such that each of the geo-referenced regions has a width corresponding to the width of the particular portion 40 that harvested the crops from the associated geo-referenced region.

In one implementation, the aggregate yield for each measurement interval is equally divided and reallocated amongst the different geo-referenced regions. For example, in the scheme of Figure 2, one third of the aggregate yield determined for measurement interval 5 is reallocated to each of geo-referenced regions 70, 72 and 74. As will be described hereafter, in other implementations, the aggregate yield from each measurement interval is differently allocated amongst two or more different geo-referenced regions. In one implementation, the allocation of the aggregate yield from a particular measurement interval to different geo-referenced regions is weighted. For example, in one implementation, the allocation of aggregate yield from a particular measurement interval is weighted based upon detected plant characteristics for each of the different geo-referenced regions. Such plant characteristics are detected during the harvest of the plants, such as when the plants are being interacted upon by harvester 22, and/or at times preceding the engagement of the plants by harvester 22. For example, in one implementation, plant characteristics are determined and recorded during cultivating, during fertilizer, herbicide or insecticide application or by overhead aerial photography/video for later aggregate yield allocation. In another implementation, the allocation of aggregate yield from a particular measurement interval is weighted based upon different sizes of different crop removal portions 40.

As further shown by Figure 2, in the example illustrated, the aggregate yield for each measurement interval for each crop removal portion 40 is consistently allocated back to a geo-referenced region that was traversed during a prior measurement interval. For example, the aggregate yield for each measurement interval for crop removal portion 40A is consistently allocated back to a geo-referenced region that was traversed by harvester 22 during a measurement interval preceding the aggregate yield measurement interval by two measurement intervals. The aggregate yield for measurement interval 3 is allocated back to the geo-referenced region traversed by harvester 22 during measurement interval 1; the aggregate yield for measurement interval 4 is allocated back to the geo-referenced region traversed by harvester 22 during measurement interval 2; the aggregate yield for measurement interval 5 is allocated back to the geo-referenced region 70 traversed by harvester 22 during measurement interval 3; and so on. Likewise, the aggregate yield for each measurement interval for crop removal portion 40B is consistently allocated back to a geo-referenced region that was traversed by harvester 22 during a measurement interval preceding the aggregate yield measurement interval by three measurement intervals. The aggregate yield for each measurement interval for crop removal portion 40C is consistently allocated back to a geo-referenced region that was traversed by harvester 22 during a measurement interval preceding the aggregate yield measurement interval by four measurement intervals. This pattern of aggregate yield allocation is based on a presumption that the travel time for crops to travel from portions 40 to aggregate yield sensor 28 does not change. In such an implementation, such travel times associated with the different crop removal portions are determined by the manufacturer of harvester 22 through testing and data collection and/or are established and recorded during an initial calibration of harvester 22.

In another implementation, the allocation of aggregate yield from each measurement interval to a geo-referenced region that was traversed during an earlier measurement interval varies. For example, in one implementation, the travel times for each of portions 40 to aggregate yield sensor 28 are continuously or periodically sensed. In one implementation, harvester 22 comprises sensors 80A, 80B, 80C (shown in Figure 1 and collectively referred to as sensors 80) that sense or detect the speed at which crops are conveyed or the time for crops to travel from each of the individual portions 40 to aggregation location 48. For example, in one implementation, times T1, T2 and T3 are determined by sensors 80 comprising cameras which capture a series of images, wherein the images are processed to measure travel times of different sections of harvester 22. For example, in one implementation, such sensors 80 determine times T1, T2 and/or T3 by capturing images of an ear of corn and tracking movement of the ear of corn in a series of time-stamped images.

In one implementation, harvester 22 additionally comprises sensors that sense or detect the speed at which crops travel from aggregation location 48 to aggregate yield sensor 28. For example, in one implementation, harvester 22 additionally comprises sensor 81 (schematically shown) which senses or detects the speed at which crop travels from aggregation location 48 to aggregate yield sensor 28. In such an implementation, yield allocation module 52 takes into account changes in performance over time of crop conveyors 42 due to wear and/or due to operational adjustments during the harvest of crops. For example, in one implementation, as harvester 22 is harvesting a crop, crop conveyors 42 and/or crop conveyor 44 undergo changes in the rate at which such crop conveyors convey the crop. In yet another implementation, the travel times are based upon control signals establishing the speed of the different crop conveyors 42, 44.

In one implementation, the conveyance speed of crop conveyors 42 and 44 uniformly change. In another implementation, the conveyance speed of crop conveyors 42 and 44 differently change, such as where the speed of crop conveyor 42C is increased to a greater extent as compared to crop conveyor 42B. Regardless of whether the conveying speeds of crop conveyors 42, 44 are uniformly or non-uniformly adjusted, yield allocation module 52 automatically adjusts the allocation of aggregate yield based upon signals from sensors 80.

In yet another implementation, harvester 22 additionally comprises roll sensor 86 and pitch sensor 88. Roll sensor 86 senses and detects the roll of harvester 22 as it is traversing a growing medium or field. Pitch sensor 88 senses and detects a current pitch of harvester 22 as it is traversing a growing medium or field. The detected roll and pitch of harvester 22 is recorded in memory 54 and associated with the particular geo-referenced region that was traversed by harvester 22 when harvester 22 experienced the detected roll and pitch. The roll and/or pitch of harvester 22 impacts the speed at which crops from different portions 40 are conveyed to aggregate yield sensor 28. In such an implementation, yield allocation module 52 automatically adjusts the allocation of the aggregate yield to geo-referenced regions previously traversed by harvester 22 during previous measurement intervals based upon signals from roll sensor 86 and/or pitch sensor 88.

For example, in one implementation, if harvester 22 has a forward pitch, leaning forward, such as when harvester 22 is traveling down an incline, conveyance of crops to a rearwardly located aggregate yield sensor 28 is prolonged, wherein yield allocation module 52 takes into account the longer time required for the crop to travel to aggregate yield sensor 28 by allocating the aggregate yield from a later measurement interval farther back in time to a geo-referenced region traversed during an even earlier measurement interval. If harvester 22 has a rearward pitch, leaning rearward, such as when harvester 22 is traveling up an incline, conveyance of crops to a rearwardly located aggregate yield sensor 28 is shortened, wherein yield allocation module 52 takes into account the shorter time required for the crop to travel to aggregate yield sensor 28 by allocating the aggregate yield to a geo-referenced region traversed during a more recent measurement interval.
In one implementation, if signals from roll sensor 86 indicate that harvester 22 has a roll to the right side of harvester 22, such as when harvester 22 is traveling across a side of a hill and leaning towards the right side of harvester 22, conveyance of crops from crop removing portions 40 on the right side of harvester 22 may have a longer travel time while conveyance of crops from crop removing portions 40 on the left side of harvester 22 may have a shorter travel time due to gravity. In such a circumstance, yield allocation module 52 automatically adjusts to the sideways tilt of harvester 22 by allocating the aggregate yield from a later measurement interval to different geo-referenced regions depending upon whether the geo-referenced region was harvested by a left side of harvester 22 or by a right side of harvester 22.

Likewise, if signals from roll sensor 86 indicate that harvester 22 has a roll to the left side of harvester 22, such as when harvester 22 is traveling across a side of a hill and leaning towards the left side of harvester 22, conveyance of crops from crop removing portions 40 on the left side of harvester 22 may have a longer travel time while conveyance of crops from crop removing portions 40 on the right side of harvester 22 may have a shorter travel time due to gravity. In such a circumstance, yield allocation module 52 automatically adjusts to the sideways tilt of harvester 22 by allocating the aggregate yield from a later measurement interval to different geo-referenced regions depending upon whether the geo-referenced region was harvested by a left side of harvester 22 or by a right side of harvester 22.

Machine control module 54 comprises software, code, circuitry and/or program logic providing instructions for directing processor 32 to adjust operational settings or parameters of machine control 24 of harvester 22 based upon the allocation of aggregate yield to different geo-referenced regions. For example, in one implementation, machine control module 54 automatically adjusts operational speeds are conveying speeds of crop conveyors 42 based upon allocations of the aggregate yield to the different geo-referenced regions. In another implementation, machine control module 54 automatically adjusts operational settings for crop removal portions 40 based upon allocations of aggregate yield to the different geo-referenced regions. In yet another implementation, the control module 54 automatically adjusts operational settings of a threshing component, such as concave spacings in a combine, based upon allocations of aggregate yield to different geo-referenced regions.

Yield mapping module 56 comprises software, code, circuitry and/or program logic providing instructions for directing processor 32 to map the allocation of aggregate yield to the different geo-referenced regions traversed by harvester 22. In one implementation, yield mapping module 56 records or stores the maps of yield for the different geo-referenced regions in data storage 58. Data storage 58 comprises a data storage portion of memory 34. In one implementation, in addition to storing yield maps for the different geo-referenced regions, data storage 58 also stores additional data such as the aggregate yield for the different measurement intervals as well as earlier detected plant characteristics that are detected during the harvest of such plants or that are detected at earlier times prior to engagement of the plants by harvester 22, such as during herbicide, insecticide or fertilizer application, cultivation or overhead or aerial crop data collection. As noted above, in different implementations, data storage 58 is carried by harvester 22, at a location remote from harvester 22 and/or is distributed across different sites.

Figure 1 illustrates a portion of an example yield map 120 recorded in data storage 58 by yield mapping module 56 in accordance with the example allocation scheme 100 shown in Figure 2. The example yield map 120 is illustrated as having three yield map regions 122, 124 and 126. In the example illustrated, each yield map region 122, 124, 126 has a resolution having a width equal to the combined or collective width of portions 40 and a length equal to the distance traveled by harvester 22 during the associated measurement interval. Yield map region 122 comprises those geo-referenced regions harvested by crop removal portions 40 and traversed by harvester 22 during measurement interval 1. In the example illustrated, the yield for region 122 comprises the portion of the aggregate yield from measurement interval 3, from measurement interval 4 and from measurement interval 5. Likewise, Yield map region 124 comprises those geo-referenced regions harvested by crop removal portions 40 and traversed by harvester 22 during measurement interval 2. In the example illustrated, the yield for region 122 comprises the portion of the aggregate yield from measurement interval 4, from measurement interval 5 and from measurement interval 6. Yield map region 122 comprises those geo-referenced regions harvested by crop removal portions 40 and traversed by harvester 22 during measurement interval 3. In the example illustrated, the yield for region 122 comprises the portion of the aggregate yield from measurement interval 4, from measurement interval 5 and from measurement interval 6.

Figure 3 is a flow diagram of an example method 200 for allocating aggregate yield to geo-referenced regions. As indicated by block 210, processor 32 receives an aggregate yield value during a measurement interval. In the example implementation of Figure 1, processor 32 determines the aggregate yield in accordance with instructions provided by aggregate yield module 50 and signals received from aggregate yield sensor 28. As indicated by block 212, processor 32 identifies geo-referenced regions crossed by harvester 22 during the measurement interval. Such geo-referenced regions are identified based upon signals from geo-referencing system 26. As indicated by block 216, yield allocation module 52 allocate aggregate yield portions to regions based upon the travel times of the crop from different portions of harvester 22, such as crop removal portions 40. As indicated by block 218, system 20 outputs aggregate yield allocations. In the example implementation of Figure 1, such output is utilized by machine control module 54 to adjust the operational parameter settings of machine control 24 and/or by yield mapping module 56 to present and display yield maps, such as yield map 120, on display 30 and/or store such maps in data storage 58.

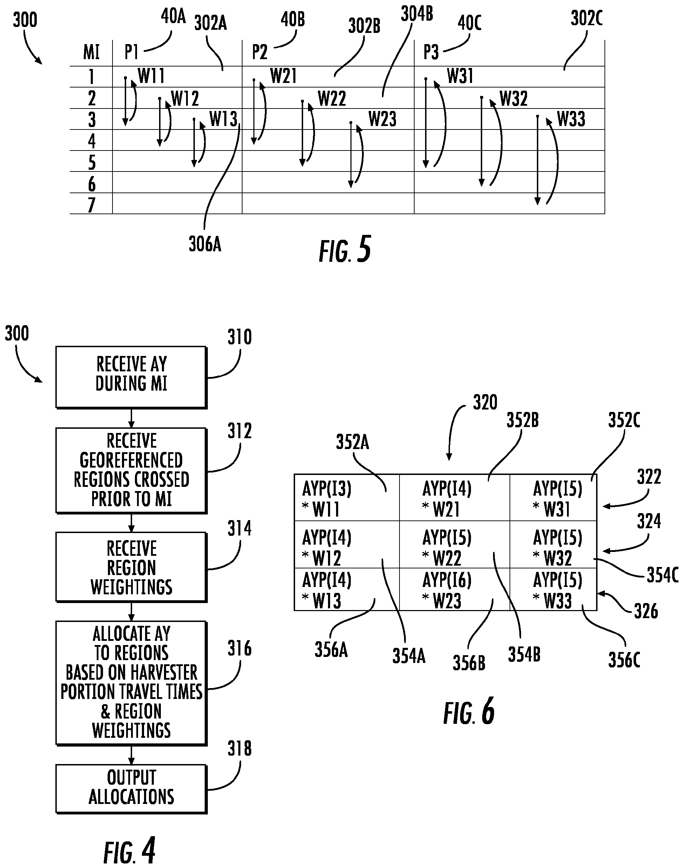

Figure 4 is a flow diagram illustrating an example method 300 for allocating aggregate crop yield. Method 300 is similar to method 200 except that method 300 applies different allocation weightings to different regions. As indicated by block 310, processor 32 receives an aggregate yield value during a measurement interval. In the example implementation a Figure 1, processor 32 determines the aggregate yield in accordance with instructions provided by aggregate yield module 50 and signals received from aggregate yield sensor 28. As indicated by block 312, processor 32 identifies geo-referenced regions crossed by harvester 22 during the measurement interval. Such geo-referenced regions are identified based upon signals from geo-referencing system 26.

As indicated by block 314, processor 32 receives weightings for the different geo-referenced regions that have been crossed prior to the measurement interval. In one implementation, such weightings are based upon characteristics of the plants from each of portions 40 as detected during harvesting of the plants by harvester 22. For example, in one implementation, harvester 22 includes sensors that detect a thickness of each of the stalks of the plants being harvested by each of the regions 40, wherein allocation of aggregate yield to each of the regions 40 is weighted based upon the detective thickness of the plants by any of the regions 40. For example, two geo-referenced regions traversed by harvester 22 during the same measurement interval may receive different aggregate yield allocations due the stalks and one of the geo-referenced regions being thicker or wider than the stalks and the other of the geo-referenced regions, where the greater thickness of the stalk is determined as being linked to greater crop yield.

In another implementation, the two geo-referenced regions traversed by harvester 22 during the same measurement interval may receive different aggregate yield allocations from a later measurement interval due to other indications reflecting greater yield. For example, in one implementation, harvester 22 senses an impact of the crop, such as ears of corn, with harvester 22, such a stripper plate of harvester 22, wherein the two geo-referenced regions traversed by harvester 22 during the same measurement interval may receive different aggregate yield allocations from a later measurement interval due to sensed crop impacts being larger from plants in one geo-referenced region versus another geo-referenced region.

In yet another implementation, such yield allocation weightings are based upon captured video or images of the plants during harvest. For example, in one implementation, cameras carried by harvester 22 capture images of the plants prior to engaging with harvester 22, wherein such images are analyzed. The results of such analysis are used to generate and apply yield allocation weightings. For example, in one implementation, light detection and ranging (LIDAR) is used as a basis for estimating yield, wherein the yield estimates are used to generate yield allocation weightings for allocating the sensed aggregate yield to different geo-referenced regions. In yet other implementations, such weightings are determined based upon other sensed characteristics of plants being harvested by harvester 22.

In yet other implementations, yield allocation weightings are based upon historical plant data acquired for the different geo-referenced regions prior to harvesting. Such historical plant data is acquired during field operations at any time from planting up to harvesting. For example, during field operations such as cultivation or the application of herbicide, insecticide and/or fertilizer, one or more plant characteristics are detected are sensed and stored. Different yield allocation weightings are determined based upon such historical data. Certain plant characteristics taken at various times are linked to greater yield. For example, taller plants, thicker plants, greener plants may all be linked to greater yield. In such an implementation, if a first geo-referenced region traversed by harvester 22 during a measurement interval is associated with historical data indicating that the region contained taller plants, thicker plants and/or greener plants during cultivation and/or during the application of herbicide, insecticide, fertilizer, as compared to a second geo-referenced region traversed by harvester 22 during the same measurement interval, yield allocation model 52 applies a larger region yield allocation weighting to the first geo-referenced region as compared to the second geo-referenced region. In one implementation, such historical data may additionally or alternatively be acquired through overhead or aerial surveillance of plants within a field prior to harvesting.

As indicated by block 316, yield allocation module 52 allocates aggregate yield portions to regions based upon the travel times of the crop from different portions of harvester 22, such as crop removal portions 40, and the region weightings. Figure 5 schematically illustrates an example aggregate yield allocation scheme 300 carried out by aggregate yield allocation system 20. As with scheme 100 shown in Figure 2, scheme 300 and Figure 5 illustrates the initial removal of crop from the growing medium or field by each of crop removal portions 40 during each of measurement intervals 1, 2 and 3. The straight arrows in Figure 3 indicate conveyance of the removed crop to aggregate yield a sensor 28, wherein the end of such straight arrows indicate the measurement interval during which the removed crop arrives at aggregate yield sensor 28 and contributes to a determined aggregate yield for an associated measurement interval. The curved allocation arrows in Figure 5 indicate allocation of aggregate yield from each particular measurement interval to geo-referenced regions which were traversed by harvester 22 during earlier measurement intervals.

Aggregate yield allocation scheme 300 is similar to scheme 100 except that allocation scheme 500 additionally illustrates the application of different region weightings W. As described above with respect to block 314 in Figure 4, in one implementation, such weightings W are based upon characteristics of the plants from each of portions 40 as detected during harvesting of the plants by harvester 22 and/or are based upon historically acquired characteristics or data regarding the plants from each of the portions 40. In the example illustrated, the portion of the aggregate yield of measurement interval 3 allocated back to geo-referenced region 302 is weighted by region weighting W11 which is based upon characteristics of plants grown in region 302A. The portion of the aggregate yield of measurement interval 4 allocated back to geo-referenced region 302B is weighted by region weighting W21 which is based upon characters the plants grown in region 302B. The portion of the aggregate yield of measurement interval 5 allocated back to geo-referenced region 302C is weighted by region weighting W31 which is based upon characteristics of the plants grown in region 302C. As further shown by Figure 5, relationships between regional weightings impacts the allocation of the aggregate yield by yield allocation module 52. For example, the aggregate yield sensed during measurement interval 5 is allocated amongst regions 306A, 304B and 302C. Region weightings impact proportional allocation of the aggregate yield to the prior geo-referenced regions. In the example scheme illustrating 5, yield allocation module 52 apportions the aggregate yield of measurement interval 5 amongst regions 306A, 304B and 302C based upon the relationship between the associated region weightings W13, W22 and W31. For example, if region weighting W22 is greater than region weightings W13 or W31, yield allocation module fits two allocates a greater percentage a portion of the aggregate yield of measurement interval 5 to region 304B. In one implementation, the aggregate yield is allocated to the different regions based upon or in proportion to the relation between the region weightings.

As indicated by block 318, system 20 outputs aggregate yield allocations. In the example implementation of Figure 1, such output is utilized by machine control module 54 to adjust the operational parameter settings of machine control 24 and/or is utilized by yield mapping module 56 to present and display yield maps on display 30 and/or store such maps in data storage 58. Figure 6 illustrates an example yield map 320 resulting from the example yield allocation scheme 300 shown in Figure 5. As shown by Figure 6, yield map 320 comprises yield map regions 322, 324 and 326, with each of yield map regions 322, 324, 326 comprising a geo-referenced region from which crops are harvested by crop removal portions 40. Yield map region 322 comprises geo-referenced regions 352A, 352B and 352C (collectively referred to as geo-referenced regions 352) harvested during measurement interval 1 in Figure 5 by crop removal portions 40A, 40B and 40C, respectively. Similarly, yield map region 324 comprises geo-referenced regions 354A, 354B and 354C (collectively referred to as geo-referenced regions 354) harvested during measurement interval 2 in Figure 5 by crop removal portions 40A, 40B and 40C, respectively. Yield map region 322 comprises geo-referenced regions 356A, 356B and 356C (collectively referred to as geo-referenced regions 356) harvested during measurement interval 3 in Figure 5 by crop removal portions 40A, 40B and 40C, respectively. As shown by Figure 6, each of geo-referenced regions 352, 354 and 356 has a yield value based upon the aggregate yield sensed by agate yield system 28 during a later measurement interval and as weighted by the aggregate yield region weighting W for the particular region. Yield map 320 has a resolution having a width of each individual crop removal portion 40 and a length corresponding to the distance that harvester 22 traverses during the particular measurement interval.

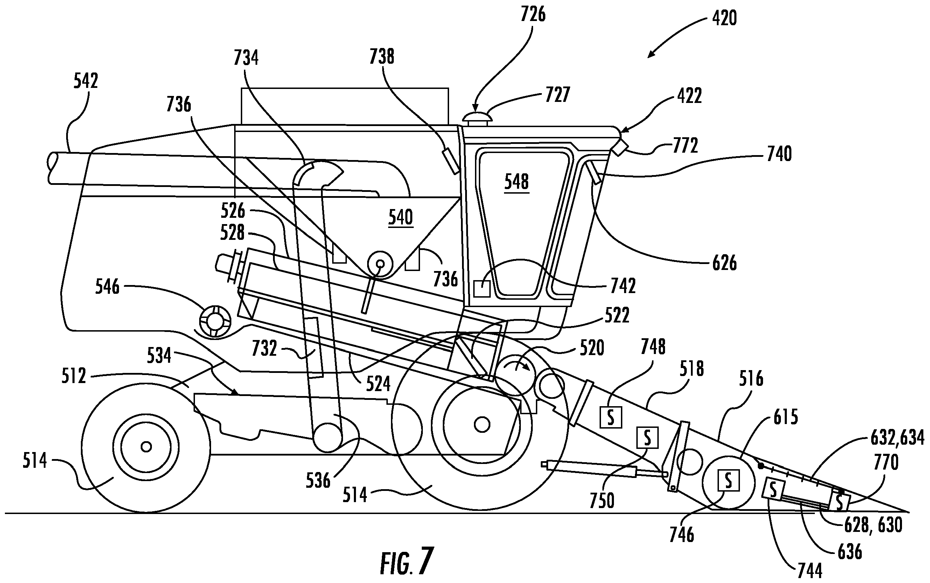

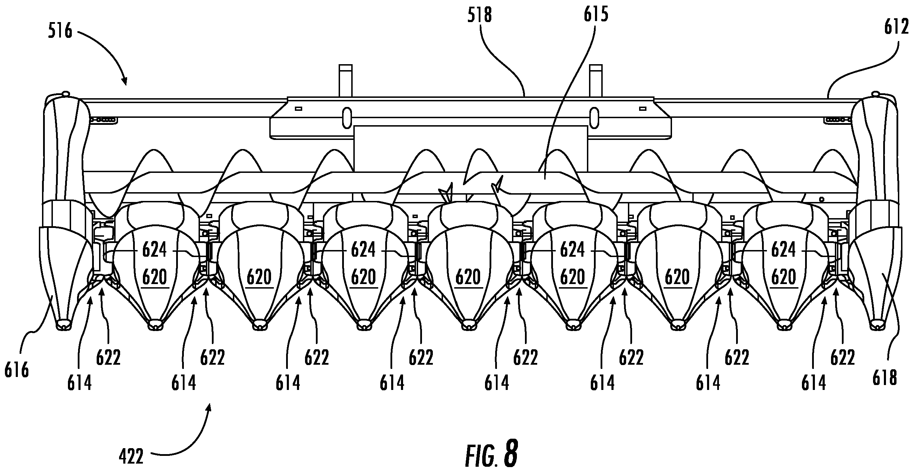

Figures 7 and 8 illustrate aggregate yield allocation system 420, an example implementation of aggregate yield allocation system 20. Aggregate yield allocation system 420 is similar to aggregate yield system 20 except that aggregate yield allocation system 420 is illustrated as being specifically used with harvester 422 (in the form of a combine). Aggregate yield allocation system 420 comprises each of the components illustrated and described with respect to Figure 1, some of which are shown and similarly numbered in Figure 7, except that aggregate yield allocation system 420 specifically includes aggregate yield sensors 732, 734, 736, 738, travel time or conveying speed sensors 740, 744, and sensors 748, 750 particular examples of sensors 28, 80, 86 and 88 respectively.

Harvester 422 comprises a chassis 512 which is supported and propelled by ground engaging wheels 514. Although harvester 422 is illustrated as being supported and propelled on ground engaging wheels 514 it can also be supported and propelled by full tracks or half-tracks. A harvesting platform or head 516 (shown as a corn head) is used to take up crop and to convey it to a feeder house 518, which serves as an aggregation location for crops from different portions of head 516.

As schematically shown in Figure 7 and shown in more detail in Figure 8, harvesting head 516 comprises frame 612, row units 614, auger 615. Frame 612 extends across the physical width of harvesting head 516 and supports row units 614. Row units 614 harvest corn from individual rows of crop and convey the harvested corn to auger 615 for further conveyance to feeder house 518. Row units 614 are spaced in a side-by-side relationship with each other a distance commensurate with the spacing between adjacent rows of corn to be harvested. As shown by Figure 8, outer dividers 616, 618 and central dividers 1620 direct plants, such as cornstalks, into engagement with each of row units 614. Central dividers 620 extend between consecutive row units 614. Dividers 616, 618 and 620 cooperate to define longitudinal passages 622 which are centered relative to the rows to be harvested and a fore-and-aft extending relatively narrow throat 624 defined by each row unit 614. In some implementations, the row units 614 may be adjustable to accommodate other row spacings.

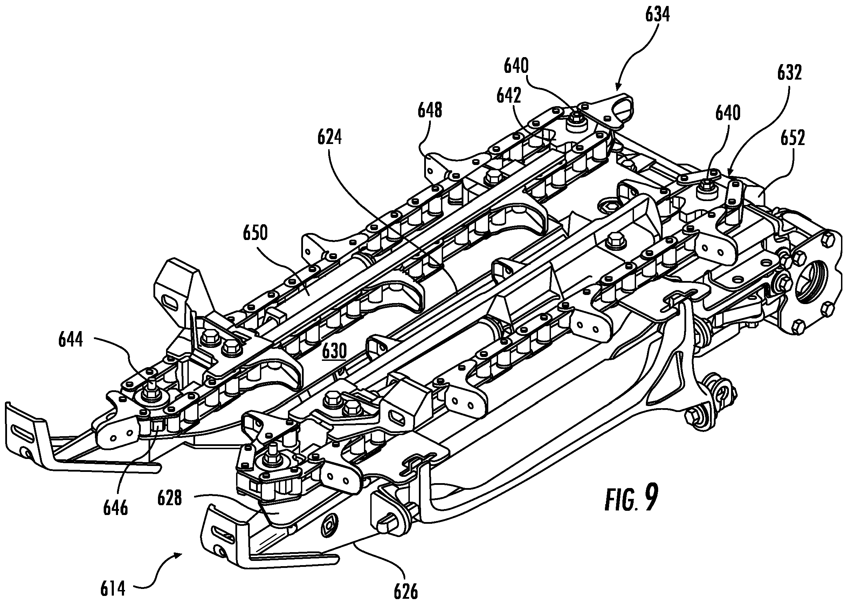

Figure 9 illustrates one example row unit 614. Each row unit 614 comprises frame 626, right and left stripper plates, also known as deck plates, 628, 630, right and left gathering units 632, 634 and snapping rolls 636, schematically shown in Figure 7 below stripper plates 628, 630. Frame 626 supports stripper plates 628, right and left gathering units 632, 634 and snapping rolls 636.
Stripper plates 628, 630 comprise plates having inner edges spaced apart so as to define narrow throat 624. Throat 624 receives cornstalks of an aligned row as row unit 1214 moves along a row of crops. As row unit 614 is moved along the row, the stalks are drawn down through throat 624 with the assistance of the snapping rolls 636 such that ears of corn carried by the stalk impact the stripper plates and are separated from the stalk. Left and right gathering units 632, 634 convey the separated ears of corn in a longitudinal direction rearwardly to auger 615. Auger 615 further conveys the separated ears of corn in transverse directions to feeder house 518. Due to the different transverse locations of the different row units 614 (as shown in Figure 8), the ears of corn from the different row unit 614 arrive at feeder house 518 at different times. In other words, the ears of corn from the outer row units or outer portions of head 516 are conveyed, on average, for longer periods of time by auger 615 as compared to the ears of corn from the more central portions or inner row units, transversely closer to feeder house 518.

As shown by Figure 7, the crop is conveyed by the feeder house 518 to a beater 520. The beater 520 guides the crop upwardly through an intake transition region 522 to a rotary threshing and separating assembly 524. Although harvester 422 is described as a rotary combine, in other implementations, harvester 422 may comprise other types of combines (for example combines having a transverse threshing cylinder and straw walkers or combines having a transverse threshing cylinder and rotary separator rotors) or other agricultural harvesting machines including, without limitation, self-propelled forage harvesters, sugar cane harvesters, and windrowers.
The rotary threshing and separating assembly 524 comprises a rotor housing 526 and a rotor 528 arranged in the rotor housing 526. The harvested crop enters the rotor housing 526 through the intake transition region 522. The rotary threshing and separating assembly 524 threshes and separates the harvested crop. Grain and chaff fall through grates at the bottom of the rotor housing onto a cleaning assembly 534. The cleaning assembly 534 removes the chaff and conducts the clean grain to a grain elevator 536 which conducts upwardly to grain tank 540. The clean grain in the grain tank 540 can be unloaded through an unloading auger 542 into a trailer or truck. Threshed straw separated from the grain is conducted out of the rotary threshing and separating assembly 524 through an outlet to a discharge beater 546. The discharge beater 546 ejects the straw out the rear of harvester 422.

As schematically shown by Figure 7, in addition to the above described elements of harvester 422, aggregate yield allocation system 420 further comprises geo-referencing system 726, aggregate yield sensors 732, 734, 736, 738, display 740, crop conveyor sensors 744, 746, pitch sensor 748, roll sensor 750 and yield allocator and control unit 742. Geo-referencing system 726 comprises a device, including localization input 727, by which different regions of a field are identified, labeled and/or geo-referenced for being assigned crop yield characteristics. In one implementation, geo-reference system 726 specifically identifies a particular region or location of the field that is currently being driven over or traversed by harvester 422. In one implementation, geo-reference system 726 identifies regions of a field with a resolution such that each individual geo-referenced region has a width substantially equal to a width of head 516. In another implementation, the resolution is such that each geo-referenced region has a width of a plurality of row units less than the full width of harvester 422, wherein the full width of harvester 422 travels across multiple distinctly identified geo-referenced regions. In yet another implementation, the resolution is such that each geo-referenced region has a width equal to an individual row of plants, wherein each geo-referenced region has a width corresponding to an individual row of plants or an individual row unit 614. In one implementation, the resolution of geo-referencing system 26 identifies geo-referenced regions having a length of a single rank of plants, a single plant position across multiple rows. In another implementation, the resolution is such that each geo-referenced region has a length of a multiple ranks of plants, a set of multiple consecutive plant positions in each row. In one implementation, geo-reference system 726 comprises an antenna and associated electronics/software as part of a global navigational satellite system (GNSS) or global positioning system (GPS). In other implementations, other devices or other methods and/or technologies are used.

As schematically shown in Figure 7, harvester 422 comprises multiple aggregate yield sensors: grain flow sensor 732, impact plate sensor 734, load sensors 736 and optical sensors 738. Grain flow sensor 732 comprises a sensor, such as a gamma ray attenuation sensor, positioned along clean grain elevator 536, which senses are measures the flow rate of aggregated harvested grain. In other implementations, grain flow sensor 732 is provided at other locations.

Impact plate sensor 734 detects the volume or mass of grain based upon impact of the grain with an impact plate. In one implementation, impact plate sensor 734 comprises an impeller plate mounted for rotation about an axis generally perpendicular to the direction of grain flow. Its deflection is dependent upon the mass flow rate of the clean grain. The deflection of the impeller plate is measured and thus data on the mass flow rate of the harvested grain is provided. Such a sensor is described in US Patent 5,343,761 and the documents recited therein.

Load sensors 736 comprise one or more load cells underlying portions of grain tank 540. In one implementation, load sensors 736 sense or detect the total weight or mass of tank 540 and the grain held by tank 540, wherein changes in the mass indicate aggregate yield. Optical sensors 738 comprise one or more cameras, optical emitter-detector pairs, such as infrared emitter-detector pairs, which detect the amount of grain within holding tank 540. In one implementation, such optical sensors 738 detect a level of grain within tank 540, wherein changes in the level of grain indicate aggregate yield. In yet another implementation, such optical sensors 738 additionally or alternatively detect a shape of the mound of grain within grain tank 540, wherein changes in the shape indicate aggregate yield. In one implementation, optical sensors 738 cooperate with load sensors 736 to indicate aggregate yield. One example of such an implementation is disclosed in US Patent Application Serial number 14/318165 filed on June 27, 2014 by Johnson et al. and entitled GRAIN MASS FLOW ESTIMATION.

In the example illustrated, signals from each of the aggregate yield sensors 732, 734, 736, 738 are used to determine an aggregate yield for different measured intervals as harvester 422 traverses a field during harvest. In one implementation, the different results from the different aggregate yield sensors are specifically averaged or otherwise combined. In another implementation, signals from one of aggregate yield sensors 732, 734, 736, 738 serves as a base measurement, wherein adjustments are made to the base measurement based upon signals from the other aggregate yield sensors. In still other implementations, one or more of such aggregate yield sensors 732, 734, 736, 738 are omitted.

Display 740 comprises a monitor, screen, panel or other device by which information is visibly communicated. In one implementation of display 740 additionally comprises auditory communication capabilities. Display 740 facilitates the presentation of information identifying the allocation of aggregate yield amongst different geo-referenced regions. In the example illustrated, display 740 is carried on board harvester 422 for viewing by an operator within cab 948 of harvester 422. In another implementation, display 740 is located remote with respect to harvester 422, such as where harvester 422 is remotely operated or such as when remote personnel or managers are analyzing or reviewing aggregate yield of different geo-referenced regions of a field.

Crop conveyor sensors 744, 746 detect the travel time of crops along head 516 by affecting the conveyance speed of different portions of head 516. Conveyor sensors 744 output signals indicating the speed at which gathering units 632, 634 convey the crop, ears of corn, rearwardly along each of row units 614 to auger 615. In one implementation, each row unit 614 is equipped with an assigned sensor 744 such that different conveyance speeds of different gathering unit 632, 634 along different row unit 614 are detected. Conveyor sensor 746 comprises one or more sensors that output signals indicating the time for the crop, ears of corn, to be transversely conveyed to feeder house 518 and/or the conveyance speed of auger 615. In the example illustrated, the time for the crop to be conveyed from feeder house 518 to aggregate sensors 732, 734, 736, 738 is determined based upon the time at which the crop being conveyed is found to reach feeder house 516, based upon signals from sensor 744 and 746 and the rate at which the crop is conveyed from feeder house 518 to the aggregate yield sensors by the various components of harvester 422 between feeder house 518 and the aggregate yield sensors.

Pitch sensor 748 comprises one or more sensors that output signals indicating a pitch of harvester 422. In one implementation, pitch sensor 748 outputs signals indicating a pitch of head 516, independent of what might be the pitch of a remainder of harvester 422. Roll sensor 750 comprises one or more sensors that output signals indicating a roll of harvester 422. In one implementation, role sensor 750 outputs signals indicating a roll of head 516, independent of what might be a different roll for the remainder of harvester 422. In some implementations, one or more of sensors 744, 746, 748 and 750 are omitted, wherein predetermined default values are utilized for the conveyor speeds, pitch and/or roll.

Yield allocator and control unit 742 comprises a computing component incorporating processor 32 and memory 34 described above. Yield allocator and control unit further comprises machine controller 24 described above. Although illustrated as being carried by harvester 422, in other implementations, yield allocator and control unit 742 is located remote from harvester 422 or is distributed with portions carried by harvester 422 and with other portions remote from harvester 422, wherein communication is facilitated in a wireless fashion using radio frequencies or other wireless technologies.

In operation, processor 32 of unit 742 receives an aggregate yield value during a measurement interval. In the example implementation, processor 32 determines the aggregate yield in accordance with instructions provided by aggregate yield module 50 and signals are received from one or more of aggregate yield sensors 732, 734, 736, 738. Processor 32 of unit 742 receives signals from localization input 727 indicating geo-referenced regions crossed by harvester 422 during the measurement interval. Based upon signals from sensors 744 and 746, yield allocation module 52 of unit 742 determines differences in times for crops collected by different portions, different individual row units or groups of row units 614 of head 516 to travel to aggregate yield sensors 732, 734, 736, 738. In one implementation, yield allocation module 52 of unit 742 determines differences in time for crops collected by different portions of head 516 to travel to feeder housing 518 and adjusts a base or predetermined travel time from head 615 to tank 540 based upon the differences.

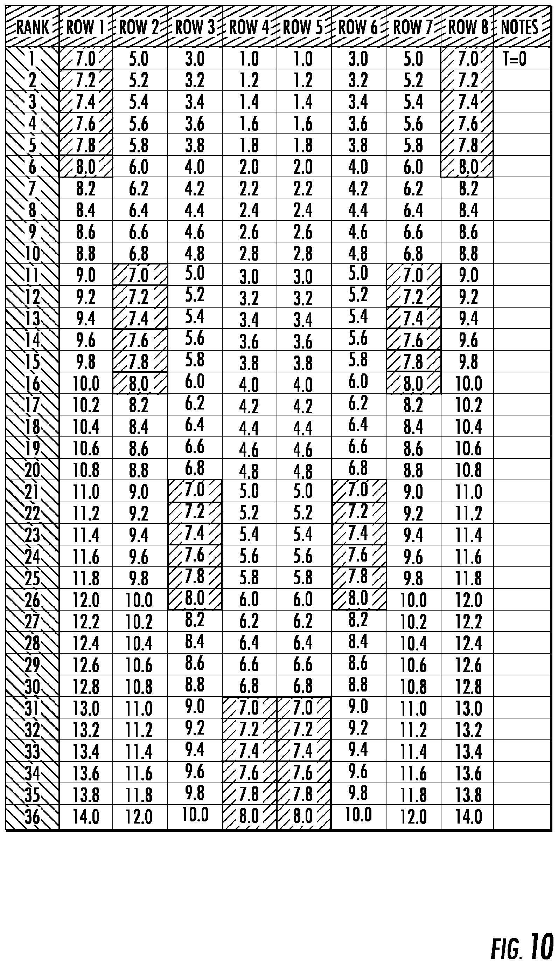

Figure 10 schematically illustrates an example area of a field being harvested by harvester 422 which is eight rows by 36 ranks in area. Figure 10 illustrates one example set of different travel times for crops traveling from different portions of head 516 to a location where the crops are sensed for the purpose of determining aggregate yield. The time at which harvested material, such as an ear of corn, being harvested arrives at feeder house 518 for each plant is shown in each cell. In the example illustrated, travel time is one second up each row unit 614 and two seconds per row away from the center rows 3 and 4. Delay from the feeder house to the particular aggregate yield sensor being utilized, aggregate yield sensor 734, is 10 seconds. In the example shown in Figure 10, the measured aggregate yield from the measurement interval 17.0 to 18.0 seconds it is from crops, ears, entering feeder house 518 at the interval 7.0 to 8.0 seconds. These crops, such as ears, are identified in Figure 10 by shading. In particular, as indicated by such shading, crop ranks 1-6, 11-16, 21-26 and 31-36 (indicated in the leftmost column) all arrive at the aggregate yield sensor 734 during the same measurement interval, during the time interval of 17.0 to 18.0 seconds.

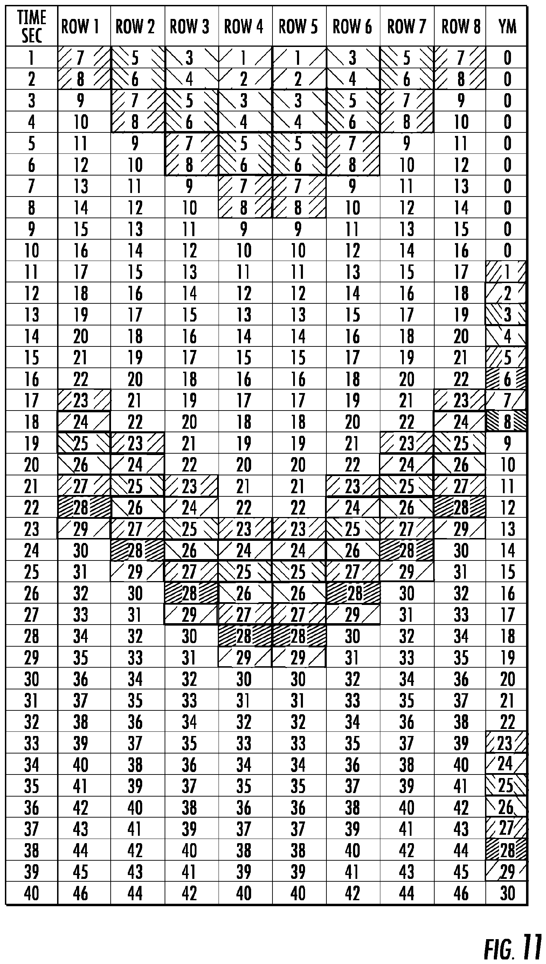

Figure 11 is a diagram illustrating the different times at which crops harvested by the different row unit 614 during a same measurement interval contribute to the detected aggregate yield for multiple subsequent measurement intervals. Figure 11 illustrates the harvesting of crops by harvester 422 having eight row units 614 during 40 measurement intervals, wherein each measurement interval is one second. The time at which crops or plants from a particular row unit 614 arrive at feeder house 518 is shown in each cell. As shown by Figure 11, crops harvested by Row 1 at time 17 (indicated in the left most time column) arrive at feeder house 518 at time 23 (indicated in the cell corresponding to time 17 and Row 1). Crops harvested by Row 2 during the same time 17 arrive at the feeder house at time 21, crops harvested by Row 3 during the same time 17 arrive at feeder house 518 at time 19 and so on, reflecting the travel time of two seconds per row away from center Rows 3 and 4. Crops harvested by Row 1 at time 18 arrive at feeder house 518 at time 24, reflecting the one second measurement interval.

In the example illustrated, delay from the feeder house to the particular aggregate yield sensor being utilized, aggregate yield sensor 734 is 10 seconds. The cells of the aggregate yield monitoring column on the right side of Figure 11 are filled with the time at which the crop presently contributing to the aggregate yield for the current measurement interval or time interval previously arrived at feeder house 518. In the example illustrated, the crop arriving at feeder house 518 at time 23 (the value contained in the aggregate yield monitoring column on the right side of Figure 11) contribute to the aggregate yield value at time 33 (as indicated in the left most time column), reflecting the 10 second travel time from feeder house 518 to the particular aggregate yield monitor or sensor being utilized to detect aggregate yield.

As shown by the shading in Figure 11, the aggregate yield value as detected during time 33 is an aggregate of the crop arriving at feeder house 518 at time 23. As further shown by Figure 11, the crop arriving at feeder house 518 at time 23 were initially harvested by the different row unit 614, Rows 1-8, at different times due to the differences in time for the crop to travel to feeder house 518. In the example illustrated, crop arriving at feeder house 518 at time 23 were harvested by Rows 1-4 at times 17, 19, 21 and 23, respectively, from different geo-referenced regions that were traversed by harvester 22 during the different times 17, 19, 21 and 23, respectively. Likewise, crops arriving at feeder house 518 at time 23 were harvested by Rows 5-8 at times 23, 21, 19 and 17, respectively, from different geo-referenced regions that were traversed by harvester 22 during the different times 23, 21, 19 and 17, respectively. As indicated by shading, the aggregate yield measured at a particular time, for a particular measurement interval, is the result of the aggregation of crop harvested from geo-referenced regions in the pattern or shape of a chevron, a line or strip in the shape of a V or an inverted V, depending on orientation.

Yield allocation module 52 of yield allocation and control unit 742 allocate or apportion the aggregate yield detected during each time or measurement interval back to earlier geo-referenced regions based upon the travel times of the crop from different portions of harvester 422, such as from the different row unit 614. For example, in the example travel time scheme shown in Figures 9 and 10, unit 742 allocate the measured aggregate yield from measurement interval or time 33 back to the geo-referenced regions that were traversed by head 516 of harvester 422 during measurement intervals or times 17, 19, 21 and 23. Similarly, unit 742 allocates the measured aggregate yield from measurement interval or time 34 back to geo-referenced regions that were traversed by head 516 of harvester 422 during measurement intervals or times 18, 20, 21 and 23, allocate the measured aggregate yield for measurement interval or time 35 back to geo-referenced regions that were traversed by head 516 of harvester 422 during measurement intervals or times 19, 21, 22 and 23, respectively, and so on. As shown by shading in Figure 11, unit 742 of portions or allocates the aggregate yield from a particular measurement interval or time to previously traversed geo-referenced regions which are part of a chevron shape.

In the example yield allocation scenario illustrated in Figures 9 and 10, the measurement interval is one second. In other implementations, the measurement interval is less than one second. In one implementation, the measurement interval is between 0.05 seconds and 0.1 seconds to provide spatial resolution of approximately 2 foot x 2 foot with a global positioning system position error of less than 0.5 inches, facilitating per plant allocations. In circumstances where row spacing is 18-38 inches for corn and plant spacing within a row is 6 inches on up spatial resolution of 2 foot by 2 foot contains several plants.

In other implementations, other measurement intervals are employed. For example, in other implementations, harvester 422 may move through a field at 2 mph, such that it is traveling just under 3 feet/second. In one i position location system 726 comprises a GPS receiver that with corrections reports position with 0.5 inch accuracy at a 10 Hz rate or approximately every 4 inches. Corn is often planted with 6 inch seed separation and 24 inch row separation. As a result, the GNSS or other positioning system reporting rate and spatial accuracy, combined with row crops of known separation, facilitates the allocation of aggregate yield to individual plants.

In the example yield allocation scheme shown in Figures 9 and 10, the travel times for crops from different row units 614 to feeder housing 518 is illustrated as being uniform across the different transversely located the units 614. Rows 1-8, with the travel time being uniformly two seconds per row away from the center rows 3, 4. In other implementations, different harvesters may have different travel times. Moreover, such travel times on the same harvester may vary at different times and from row to row. For example, harvester 22 and its conveyors, including gathering unit 62, 634 and auger 615, may operate at different speeds at different times as harvester 22 is traversing a field. In the example illustrated, sensors 744 and 746 output signals indicating such different speeds at different times, wherein yield allocator and control unit 742 adjusts the allocation or apportionment of the aggregate yield to the different geo-referenced regions based upon the different speeds or crop travel times as indicated by sensors 744, 746.

At yet other times, harvester 422 may be traveling across the side of a hill, resulting in head 516 having an uneven roll or roll that is not level. Roll sensor 748 outputs signals indicating such an uneven roll. In such a circumstance, crops harvested by row units 614 closer to the top of the hill may have shorter travel times to feeder housing 518 as compared to crops harvested by row units 614 closer to the bottom of the hill due to gravity. Yield allocator and control unit 742 adjusts the allocation or apportionment of the aggregate yield to the different geo-referenced regions based upon the different travel times based upon the roll of head 516 at the time that the particular geo-referenced regions are crossed by head 516.

At yet other times, harvester 422 may be traveling up a hill or down, resulting in head 516 undergoing pitch, not being level, but leaning upward or leaning downward. Pitch sensor 750 outputs signals indicating such a pitch. In circumstances where head 516 is inclined going uphill, crops harvested by row units 614 may have shorter travel times to feeder housing 518 due to the assistance of gravity. Likewise, in circumstances where head 516 is declined going downhill, crops harvested by row units 614 may have longer travel times to feeder housing 518 due to the resistance of gravity. Yield allocator and control unit 742 adjusts the allocation or apportionment of the aggregate yield to the different geo-referenced regions based upon the different travel times based upon the pitch of head 516 at the time that the particular geo-referenced regions are crossed by head 516. In addition, time for crops to travel from the feeder house to aggregate yield sensor may also vary with time and may be adjusted with data from pitch sensor, roll, sensor, or other sensorss.

In one implementation, travel time adjustments resulting from changes in pitch or roll of harvester head 516 are additionally based upon the type of crop being harvested, the cleanliness of the crop being harvested, the moisture content of the crop being harvested and the total initial aggregate yield allocations to a particular geo-referenced region. For example, the type of crop being harvested may impact the speed at which harvested crops flow transversely along head 516 are rearwardly along head 516. The amount of foreign material, such as chaff, in the grain being harvested and/or the moisture content of the grain being harvested may further impact the speed at which grain flows. The volume or amount of grain being carried by head 516 may also impact the speed at which harvested crops flow transversely along head 516 or rearwardly along head 516. In one implementation, yield allocation in control unit 742 differently adjusts for changes in pitch and/or roll of head 516 based upon the type of crop being harvested, the cleanliness and/or moisture level of the crop being harvested and/or the volume or mass of the aggregate yield.

Yield allocation in control unit 742 outputs aggregate yield allocations. In the example implementation, yield allocation and control unit 742 performs prescriptive harvester adjustment, adjusting the operational parameter settings of harvester 422 based upon the aggregate yield allocations. In one implementation, yield mapping module 56 of unit 742 present and display yield maps, such as yield map 120 (shown in Figure 1), on display 730 and/or store such maps in data storage 58 of unit 742.

In one implementation, yield allocation and control unit 742 additionally bases the allocation of aggregate yield upon yield allocation factors or weightings for different geo-referenced regions and/or the plants growing in such different geo-referenced regions. In one implementation, yield allocation a control unit 742 identifies delays between crop harvest and aggregate yield measurement for each row as harvested by each row unit 614. Such time delays may be variable due to pitch and/or role of header 518 as well as crop processing elements. Unit 742 additionally defines a data interval. Based upon collected time stamped individual geo-referenced region yield predictions and time-stamped aggregate yield data, yield allocation control unit 742 assigns or allocates the aggregate yield for the measurement interval to individual plants and/or individual geo-referenced regions. In one implementation, such time stamped individual geo-referenced region yield prediction data and time stamped aggregate yield data or additionally location stamped, indicating the geo-referenced location based upon signals from localization input 726.

In one implementation, harvester 422 additionally comprises sensor 770 and/or sensor 772. Sensors 770 and 772 outputs signals indicating one or more characteristics of individual plants being harvested or groups of plants as they are being harvested. In such an implementation, yield allocation and control unit 742 utilizes such signals to identify or predict yield differences between different plants and/or different groups of plants being harvested by the different portions, row units 614, of harvester 422. Based upon the predicted yield differences, yield allocation and control unit 742 adjusts the allocation or apportionment of the aggregate yield amongst the different geo-referenced regions from which plants were harvested by the different row units 614.

In one implementation, sensor 770 comprises a sensor that interacts, engages or contacts the plants as they are being harvested, wherein such interaction results in signals indicating one or more characteristics of the plants being harvested. In one implementation, sensor 772 comprises a sensor that detects one or more characteristics of the plants being harvested without contacting the plants being harvested. For example, in one implementation, sensor 772 comprises a camera or LIDAR that output signals indicating characteristics of the plants being harvested. In such implementations, control unit 742 includes software, code or programmed logic to predict a yield for the different plants or groups of plants based upon signals from sensor 770 and/or sensor 772. The predicted yield is used to apply different weightings to adjust aggregate yield allocation amongst different geo-referenced regions.

In one implementation, each row unit 614 of head 516 includes a sensor 770 that detects a thickness of each of the stalks of the plants being harvested from each of the geo-referenced regions by the different row units 614 or groups of row units 614. One implementation, sensor 772 is configured to detect the thickness of individual stalks. In such an implementation, unit 742 allocates aggregate yield from a particular measurement interval to each of the geo-referenced regions traversed by the different row unit 614 using a weighting that is based upon the detective thickness of the plants harvested by integral unit 614. For example, two geo-referenced regions traversed by harvester 422 during the same measurement interval may receive different aggregate yield allocations due the stalks in one of the geo-referenced regions harvested by one of the row unit 614 being thicker or wider than the stalks in the other of the geo-referenced regions harvested by other row unit 614, where the greater thickness of the stalk is determined as being linked to greater crop yield.

In another implementation, the two geo-referenced regions traversed by harvester 22 during the same measurement interval may receive different aggregate yield allocations from a later measurement interval due to other indications reflecting greater yield. For example, in one implementation, each row unit 614 comprises a sensor 770 that senses an impact of the crop, such as ears of corn, with harvester 422, such a stripper plate 636 of harvester 422. In one implementation, each sensor 770 may comprise an auditory sensor or an accelerometer to detect the impact of the crop with harvester 422. In one implementation, larger or greater impacts producing higher amplitude signals indicate greater mass and are deemed as indicating greater yield. In such an implementation, two geo-referenced regions traversed by harvester 22 during the same measurement interval may receive different aggregate yield allocations from later measurement intervals due to differences in the sensed crop impacts being larger from plants in one geo-referenced region versus impacts from plants in another geo-referenced region. One example of such a crop impact detection system is disclosed in US Patent Application Serial No. 13771682 filed on February 20, 2013 and entitled CROP SENSING; US Patent Application Serial No. 13771727 filed on February 20, 2013 and entitled PER PLANT CROP SENSING RESOLUTION; US Patent Application Serial No. 13771760 filed on February 20, 2013 and entitled CROP SENSING DISPLAY.

In yet another implementation, such yield allocation weightings are based upon captured video or images of the plants during harvest. For example, in one implementation, sensor 772 carried by harvester 422 capture images of the plants prior to engaging with harvester 422, wherein such images are analyzed the results of such analysis I used to generate and apply yield allocation weightings. For example, in one implementation, light detection and ranging (LIDAR) is used as a basis for estimating yield, wherein the yield estimates are used to generate yield allocation weightings for allocating the sensed aggregate yield to different geo-referenced regions. In yet other implementations, such weightings are determined based upon other sensed characteristics of plants being harvested by harvester 422.

In yet other implementations, yield allocation weightings are based upon historical plant data acquired for the different geo-referenced regions prior to harvesting. Such historical plant data is acquired during field operations at any time from planting up to harvesting. For example, during field operations such as cultivation or the application of herbicide, insecticide and/or fertilizer, one or more plant characteristics are detected are sensed and stored. Different yield allocation weightings are determined based upon such historical data. Certain plant characteristics taken at various times are linked to greater yield. For example, taller plants, thicker plants, greener plants may all be linked to greater yield. In such an implementation, if a first geo-referenced region traversed by harvester 422 during a measurement interval is associated with historical data indicating that the region contained taller plants, thicker plants and/or greener plants during cultivation and/or during the application of herbicide, insecticide, fertilizer, as compared to a second geo-referenced region traversed by harvester 422 during the same measurement interval, yield allocation model 52 of the yield allocation and control unit 742 applies a larger region yield allocation weighting to the first geo-referenced region as compared to the second geo-referenced region. In one implementation, such historical data may additionally or alternatively be acquired through overhead or aerial surveillance of plants within a field prior to harvesting.

Although different example embodiments may have been described as including one or more features providing one or more benefits, it is contemplated that the described features may be interchanged with one another or alternatively be combined with one another in the described example embodiments or in other alternative embodiments.

## Claims

1. A method comprising:
receiving a first signal indicating an aggregate yield of a harvester (22) measured by an aggregate yield sensor (28) during a measurement interval, the harvester (22) comprising a head (516) with crop removal portions (40) and crop conveyors (42, 44) for conveying the crop from the crop removal portions (40) to the aggregate yield sensor (28);
receiving a second signal indicating a plurality of geo-referenced regions (70, 72, 74) across which the harvester (22) has traveled prior to the measurement interval;
allocating a portion of the aggregate yield to each of at least two geo-referenced regions (70, 72, 74) based upon different travel times for crops to travel from the crop removal portions (40) to the aggregate yield sensor (28); and
outputting aggregate yield portion allocations,
**characterized in that** the travel times for the crops to travel from the crop removal portions (40) to the aggregate yield sensor (28) are continuously or periodically sensed or based upon control signals establishing the speed of the crop conveyors (42, 44).

2. The method of claim 1 further comprising sensing a pitch of the harvester (22); and allocating a portion of the aggregate yield to the plurality of geo-referenced regions (70, 72, 74) based upon the pitch.

3. The method of claim 1 further comprising sensing a roll of the harvester (22); and allocating a portion of the aggregate yield to the plurality of geo-referenced regions (70, 72, 74) based upon the roll.

4. The method of claim 1 further comprising sensing an attribute of each of a plurality of plants harvested by and across the harvester (22); and allocating the aggregate yield amongst the plurality of plants based upon the sensed attribute of each of the plurality of plants.

5. The method of claim 1 further comprising differently weighting allocations of the aggregate yield to the plurality of geo-referenced regions (70, 72, 74).

6. The method of claim 1 further comprising determining an attribute of plants in the plurality of geo-referenced regions (70, 72, 74) prior to engagement of the plants by the harvester (22);
and allocating the aggregate yield amongst the plurality of plants additionally based upon the determined attribute of each of the plurality of plants.

7. The method of claim 1, wherein the geo-referenced regions (70, 72, 74) to which portions of the aggregate yield from the measured interval are allocated are part of a chevron shape.

8. The method of claim 1, wherein allocation of the portions of the aggregate yield from the measured interval to the plurality of geo-referenced regions (70, 72, 74) is based upon a distance traveled by a harvested crop until being sensed by the aggregate yield sensor (28), conveyance speed applied by each conveyance subsystem and forward speed of the harvester (22) head.

9. An apparatus comprising:
a harvester (22) having a header (422) with crop removal portions (40) and crop conveyors (42, 44) for conveying the crop from the crop removal portions (40) to an aggregate yield sensor (28) which is adapted to output signals indicating an aggregate yield harvested by the header (422) during a measurement interval;
a location identifier (26) to identify a plurality of geo-referenced regions (70, 72, 74) across which the harvester (22) has traveled prior to the measurement interval; and
a processor (32) programmed to determine the aggregate yield from the signals outputted by the sensor (28) during the measurement interval and to allocate the aggregate yield to the plurality of geo-referenced regions (70, 72, 74) based upon the travel time for crops sensed by the aggregate sensor (28) during the measurement interval to travel from the crop removal portions (40) to the aggregate sensor (28); and output crop allocations to each of the plurality of geo-referenced regions (70, 72, 74),
**characterized in that** the processor (32) is programmed to allocate the aggregate yield to the plurality of geo-referenced regions (70, 72, 74) based upon travel times for the crops to travel from the crop removal portions (40) to the aggregate yield sensor (28) which travel times are continuously or periodically sensed or based upon control signals establishing the speed of the crop conveyors (42, 44).

10. The apparatus of claim 9 comprising a second sensor (740, 744) to sense conveyance speed across a transverse width of the harvester (22), wherein the different travel time is determined based upon the sensed conveyance speed.

11. The apparatus of claim 9 further comprising a second sensor to sense a pitch of the harvester (22), wherein the processor allocates a portion of the aggregate yield to at least one geo-referenced region other than the primary geo-referenced region additionally based upon the pitch.

12. The apparatus of claim 9 further comprising a second sensor to sense a roll of the harvester (22), wherein the processor allocates a portion of the aggregate yield to at least one geo-referenced region other than the primary geo-referenced region additionally based upon the roll.

13. The apparatus of claim 9 further comprising a second sensor to sense an attribute of each of a plurality of plants harvested across the harvester (22), wherein the processor (32) allocates the aggregate yield amongst the plurality of plants additionally based upon the sensed attribute of each of the plurality of plants.

14. The apparatus of claim 9, wherein the processor is configured to receive an attribute of plants, the attribute acquired prior to engagement of the harvester (22) with the plants; and allocate the aggregate yield amongst the plants additionally based upon the received attribute of the plurality of plants.

15. The apparatus of claim 13, wherein the aggregate yield is allocated among sets of plants, each set being harvested by a different transverse portion of the harvester (22) and/or wherein the sensed attribute comprises a condition resulting from impact of a portion of the plant with the harvester (22).

## Patentansprüche

1. Verfahren, das Folgendes umfasst:
Empfangen eines ersten Signals, das einen Gesamtertrag (22) angibt, der durch einen Gesamtertragssensor (28) während eines Messintervalls gemessen wird, wobei die Erntemaschine (22) einen Kopf (516) mit Ernteentfernungsteilen (40) und Erntefördergeräten (42, 44) zum Befördern der Ernte von den Ernteentfernungsteilen (40) zu dem Gesamtertragssensor (28) umfasst;
Empfangen eines zweiten Signals, das mehrere georeferenzierte Gebiete (70, 72, 74) angibt, über die sich die Erntemaschine (22) vor dem Messintervall bewegt hat;
Zuweisen eines Teils des Gesamtertrags zu jedem der wenigstens zwei georeferenzierten Gebiete (70, 72, 74) basierend auf unterschiedlichen Bewegungszeiten, damit sich Ernten von den Ernteentfernungsteilen (40) zu dem Gesamtertragssensor (28) bewegen; und
Ausgeben von Gesamtertragsteilzuweisungen,
**dadurch gekennzeichnet, dass** die Bewegungszeiten für die Ernten zum Bewegen von den Ernteentfernungsteilen (40) zu dem Gesamtertragssensor (28) kontinuierlich oder periodisch erfasst werden oder auf Steuersignalen basieren, die die Geschwindigkeit der Erntefördergeräte (42, 44) einrichten.

2. Verfahren nach Anspruch 1, das ferner Folgendes umfasst: Erfassen eines Nickens der Erntemaschine (22); und Zuweisen eines Teils des Gesamtertrags zu den mehreren georeferenzierten Gebieten (70, 72, 74) basierend auf dem Nicken.

3. Verfahren nach Anspruch 1, das ferner Folgendes umfasst: Erfassen eines Rollens der Erntemaschine (22); und Zuweisen eines Teils des Gesamtertrags zu den mehreren georeferenzierten Gebieten (70, 72, 74) basierend auf dem Rollen.

4. Verfahren nach Anspruch 1, das ferner Folgendes umfasst: Erfassen eines Attributs von jeder mehrerer Pflanzen, die durch und über die Erntemaschine (22) geerntet werden; und Zuweisen des Gesamtertrags unter den mehreren Pflanzen basierend auf dem erfassten Attribut jeder der mehreren Pflanzen.

5. Verfahren nach Anspruch 1, das ferner unterschiedliche Gewichtungszuweisungen des Gesamtertrags zu den mehreren georeferenzierten Gebieten (70, 72, 74) umfasst.

6. Verfahren nach Anspruch 1, das ferner Folgendes umfasst: Bestimmen eines Attributs von Pflanzen in den mehreren georeferenzierten Gebieten (70, 72, 74) vor dem Einwirken auf die Pflanzen durch die Erntemaschine (22); und Zuweisen des Gesamtertrags unter den mehreren Pflanzen zusätzlich basierend auf dem bestimmten Attribut jeder der mehreren Pflanzen.

7. Verfahren nach Anspruch 1, wobei die georeferenzierten Gebiete (70, 72, 74), denen Teile des Gesamtertrags von dem Messintervall zugeordnet sind, Teil einer Pfeilform sind.

8. Verfahren nach Anspruch 1, wobei Zuweisen der Teile des Gesamtertrags von dem gemessenen Intervall zu den mehreren georeferenzierten Gebieten (70, 72, 74) auf einem Abstand, den eine geerntete Ernte zurückgelegt hat, bis sie durch den Gesamtertragssensor (28) erfasst wird, einer Fördergerätgeschwindigkeit, die durch jedes Fördergerätuntersystem angewandt wird, und einer Vorwärtsgeschwindigkeit des Kopfes der Erntemaschine (22) basiert.

9. Einrichtung, die Folgendes umfasst:
eine Erntemaschine (22) mit einem Kopfteil (422) mit Ernteentfernungsteilen (40) und Erntefördergeräten (42, 44) zum Befördern der Ernte von den Ernteentfernungsteilen (40) zu einem Gesamtertragssensor (28), der dazu eingerichtet ist, Signale auszugeben, die einen Gesamtertrag angeben, der durch den Kopfteil (422) während eines Messintervalls geerntet wurde;
einen Standortidentifizierer (26) zum Identifizieren mehrerer georeferenzierter Gebiete (70, 72, 74), durch die sich die Erntemaschine (22) vor dem Messintervall bewegt hat; und
einen Prozessor (32), der zu Folgendem programmiert ist: Bestimmen des Gesamtertrags aus den Signalen, die durch den Sensor (28) während des Messintervalls ausgegeben werden, und Zuweisen des Gesamtertrags zu den mehreren georeferenzierten Gebieten (70, 72, 74) basierend auf der Bewegungszeit für die Ernten, die durch den Gesamtsensor (28) während des Messintervalls erfasst werden, um sich von den Ernteentfernungsteilen (40) zu dem Gesamtsensor (28) zu bewegen; und Ausgeben von Erntezuweisungen zu jedem der mehreren georeferenzierten Gebiete (70, 72, 74),
**dadurch gekennzeichnet, dass** der Prozessor (32) zum Zuweisen des Gesamtertrags zu den mehreren georeferenzierten Gebieten (70, 72, 74) basierend auf Bewegungszeiten für die Ernten zum Bewegen von den Ernteentfernungsteilen (40) zu dem Gesamtertragssensor (28) programmiert ist, wobei die Bewegungszeiten kontinuierlich oder periodisch erfasst werden oder auf Steuersignalen basieren, die die Geschwindigkeit der Erntefördergeräte (42, 44) einrichten.

10. Einrichtung nach Anspruch 9, die einen zweiten Sensor (740, 744) zum Erfassen der Fördergerätgeschwindigkeit über eine Transversalbreite der Erntemaschine (22) umfasst, wobei die Bewegungszeit basierend auf der erfassten Fördergerätgeschwindigkeit bestimmt wird.

11. Einrichtung nach Anspruch 9, die ferner einen zweiten Sensor zum Erfassen eines Nickens der Erntemaschine (22) umfasst, wobei der Prozessor einen Teil des Gesamtertrags wenigstens einem georeferenzierten Gebiet außer dem primären georeferenzierten Gebiet zusätzlich basierend auf dem Nicken zuweist.

12. Einrichtung nach Anspruch 9, die ferner einen zweiten Sensor zum Erfassen eines Rollens der Erntemaschine (22) umfasst, wobei der Prozessor einen Teil des Gesamtertrags wenigstens einem georeferenzierten Gebiet außer dem primären georeferenzierten Gebiet zusätzlich basierend auf dem Rollen zuweist.

13. Einrichtung nach Anspruch 9, die ferner einen zweiten Sensor zum Erfassen eines Attributs für jede von mehreren Pflanzen über die Erntemaschine (22) umfasst, wobei der Prozessor (32) den Gesamtertrag unter den mehreren Pflanzen zusätzlich basierend auf dem erfassten Attribut von jeder der mehreren Pflanzen zuweist.

14. Einrichtung nach Anspruch 9, wobei der Prozessor zu Folgendem konfiguriert ist: zum Empfangen eines Attributs von Pflanzen, wobei das Attribut vor einem Einwirken der Erntemaschine (22) auf die Pflanzen erlangt wird; Zuweisen des Gesamtertrags über die Pflanzen zusätzlich basierend auf dem empfangenen Attribut der mehreren Pflanzen.

15. Einrichtung nach Anspruch 13, wobei der Gesamtertrag unter Gruppen von Pflanzen zugewiesen wird, wobei jede Gruppe durch einen unterschiedlichen Transversalteil der Erntemaschine (22) geerntet wird und/oder wobei das erfasste Attribut eine Bedingung umfasst, die sich aus dem Aufprall eines Teils einer Pflanze auf die Erntemaschine (22) ergibt.

## Revendications

1. Procédé, comprenant:
recevoir un premier signal indicatif d'un rendement global d'une moissonneuse (22) mesuré par un capteur de rendement global (28) pendant un intervalle de mesure, la moissonneuse (22) comprenant une tête (516) présentant des parties de ramassage de récolte (40) et des convoyeurs de récolte (42, 44) pour transporter la récolte à partir des parties de ramassage de récolte (40) jusqu'au capteur de rendement global (28);
recevoir un second signal indicatif d'une pluralité de régions géo-référencées (70, 72, 74) à travers lesquelles la moissonneuse (22) s'est déplacée avant l'intervalle de mesure;
attribuer une partie du rendement global à chacune d'au moins deux régions géo-référencées (70, 72, 74) sur la base de différentes durées de déplacement pour que des récoltes se déplacent à partir des parties de ramassage de récolte (40) jusqu'au capteur de rendement global (28); et
générer des attributions de parties de rendement global,
**caractérisé en ce que** les durées de déplacement pour que les récoltes passent des parties de ramassage de récolte (40) au capteur de rendement global (28) sont détectés de façon continue ou périodique ou sur la base de signaux de commande qui établissent la vitesse des convoyeurs de récolte (42, 44).

2. Procédé selon la revendication 1, comprenant en outre la détection d'un tangage de la moissonneuse (22); et l'attribution d'une partie du rendement global à la pluralité de régions géo-référencées (70, 72, 74) sur la base du tangage.

3. Procédé selon la revendication 1, comprenant en outre la détection d'un roulis de la moissonneuse (22); et l'attribution d'une partie du rendement global à la pluralité de régions géo-référencées (70, 72, 74) sur la base du roulis.

4. Procédé selon la revendication 1, comprenant en outre la détection d'un attribut de chacune d'une pluralité de plantes moissonnée par et à travers la moissonneuse (22); et l'attribution du rendement global parmi la pluralité de plantes sur la base de l'attribut détecté de chacune de la pluralité de plantes.

5. Procédé selon la revendication 1, comprenant en outre une pondération différentielle des attributions du rendement global à la pluralité de régions géo-référencées (70, 72, 74).

6. Procédé selon la revendication 1 comprenant en outre la détermination d'un attribut de plantes dans la pluralité de régions géo-référencées (70, 72, 74) avant l'engagement des plantes par la moissonneuse (22); et l'attribution du rendement global parmi la pluralité de plantes additionnellement sur la base de l'attribut déterminé de chacune de la pluralité de plantes.

7. Procédé selon la revendication 1, dans lequel les régions géo-référencées (70, 72, 74) auxquelles des parties du rendement global à partir de l'intervalle mesuré sont attribuées sont des parties en forme de chevron.

8. Procédé selon la revendication 1, dans lequel une attribution des parties du rendement global de l'intervalle mesuré à la pluralité de régions géo-référencées (70, 72, 74) est basée sur une distance parcourue par une récolte moissonnée jusqu'à ce qu'elle soit détectée par le capteur de rendement global (28), sur la vitesse de transport appliquée par chaque sous-système de transport et sur la vitesse de progression de la tête de moissonneuse (22).

9. Appareil, comprenant:
une moissonneuse (22) comprenant un bec cueilleur (422) présentant des parties de ramassage de récolte (40) et des convoyeurs de récolte (42, 44) pour transporter la récolte à partir des parties de ramassage de récolte (40) jusqu'à un capteur de rendement global (28) qui est adapté pour générer des signaux indicatifs d'un rendement global moissonné par le bec cueilleur (422) pendant un intervalle de mesure;
un identificateur de position (26) pour identifier une pluralité de régions géo-référencées (70, 72, 74) à travers lesquelles la moissonneuse (22) s'est déplacée avant l'intervalle de mesure; et
un processeur (32) programmé pour déterminer le rendement global à partir des signaux générés par le capteur (28) pendant l'intervalle de mesure et pour attribuer le rendement global à la pluralité de régions géo-référencées (70, 72, 74) sur la base de la durée de déplacement des récoltes détectée par le capteur de rendement global (28) pendant l'intervalle de mesure se déplacer à partir des parties de ramassage de récolte (40) jusqu'au capteur de rendement global (28); et pour générer des attributions de récolte à chacune de pluralité de régions géo-référencées (70, 72, 74),
**caractérisé en ce que** le processeur (32) est programmé pour attribuer le rendement global à la pluralité de régions géo-référencées (70, 72, 74) sur la base des durées de déplacement pour que les récoltes passent des parties de ramassage de récolte (40) au capteur de rendement global (28), lesdites durées de déplacement étant détectées de façon continue ou périodique ou sur la base de signaux de commande qui établissent la vitesse des convoyeurs de récolte (42, 44).

10. Appareil selon la revendication 9, comprenant un second capteur (740, 744) pour détecter la vitesse de transport à travers une largeur transversale de la moissonneuse (22), dans lequel la durée de déplacement différente est déterminée sur la base de la vitesse de transport détectée.

11. Appareil selon la revendication 9, comprenant en outre un second capteur pour détecter un tangage de la moissonneuse (22), dans lequel le processeur alloue une partie du rendement global à au moins une région géo-référencée autre que la région géo-référencée primaire additionnellement sur la base du tangage.

12. Appareil selon la revendication 9, comprenant en outre un second capteur pour détecter un roulis de la moissonneuse (22), dans lequel le processeur alloue une partie du rendement global à au moins une région géo-référencée autre que la région géo-référencée primaire additionnellement sur la base du roulis.

13. Appareil selon la revendication 9, comprenant en outre un second capteur pour détecter un attribut de chacune d'une pluralité de plantes moissonnées à travers la moissonneuse (22), dans lequel le processeur (32) alloue le rendement global parmi la pluralité de plantes additionnellement sur la base de l'attribut détecté de chacune de la pluralité de plantes.

14. Appareil selon la revendication 9, dans lequel le processeur est configuré de manière à recevoir un attribut de plantes, l'attribut étant acquis avant l'engagement de la moissonneuse (22) avec les plantes; et à attribuer le rendement global parmi les plantes additionnellement sur la base de l'attribut reçu de la pluralité de plantes.

15. Appareil selon la revendication 13, dans lequel le rendement global est attribué parmi des ensembles de plantes, chaque ensemble étant moissonné par une partie transversale différente de la moissonneuse (22) et/ou dans lequel l'attribut détecté comprend une condition qui résulte d'un impact d'une partie de la plante avec la moissonneuse (22).
